# EUROPÄISCHE PATENTSCHRIFT

(11) **EP 3 375 561 B1**
(45) Veröffentlichungstag und Bekanntmachung des Hinweises auf die Patenterteilung: **26.02.2020**
(21) Anmeldenummer: 17160611.4
(22) Anmeldetag: 13.03.2017
(51) Int. Cl.: B23P 9/02, B24B 39/04, C21D 7/08

(54) **VERFAHREN UND VORRICHTUNG ZUR BEARBEITUNG DER RADLAUFFLÄCHEN VON RÄDERN FÜR SCHIENENFAHRZEUGE**
METHOD AND DEVICE FOR MACHINING OF WHEEL TREADS OF WHEELS FOR RAILWAY VEHICLES
PROCÉDÉ ET DISPOSITIF DE TRAITEMENT DE LA BANDE DE ROULEMENT DE ROUES POUR VÉHICULES FERROVIAIRES

(43) Veröffentlichungstag der Anmeldung: 19.09.2018
(60) Teilanmeldung: 19182039.8
(73) Patentinhaber: Hegenscheidt-MFD GmbH & Co. KG, 41812 Erkelenz (DE)
(72) Erfinder: Maldaner, Jandrey, 52159 Roetgen (DE); Rudi, Alexander, 52511 Geilenkirchen (DE)
(74) Vertreter: Rausch Wanischeck-Bergmann Brinkmann

(56) Entgegenhaltungen:
- WO-A2-2016/041540
- DE-B- 1 278 274
- DE-U- 1 857 319
- UA-C2- 77 086
- US-A- 4 835 826
- US-A1- 2005 155 203

## Beschreibung

Die vorliegende Erfindung betrifft eine Vorrichtung zur Bearbeitung der Radlaufflächen von Rädern für Schienenfahrzeuge gemäß dem Oberbegriff des Anspruchs 1.

Radsätze von Schienenfahrzeugen sind dafür ausgelegt, durch ständigen Kontakt zwischen Rad und Schiene eine sichere Abstützung und Führung des Schienenfahrzeuges zu gewährleisten. Die Radsätze werden durch diesen Rollkontakt unmittelbar beansprucht und sind für eine kontrollierte Fahrzeugbewegung sicherheitsrelevant. Im Zusammenwirken mit der Schiene bestimmt die Geometrie der Radlauffläche den Lauf der Fahrzeuge. In der Instandhaltung von Schienenfahrzeugen kommt dem Radsatz daher eine besondere Bedeutung zu. Die hohen Anforderungen an die Zuverlässigkeit und Qualität erfordern eine regelmäßige Kontrolle und Beurteilung des aktuellen Bauteilzustandes und des verfügbaren Verschleißvorrates.

Das Rad-Schiene-System unterliegt im Fahrbetrieb durch die permanenten Gleit- und Rollbewegungen verschiedenen Verschleißmechanismen. Die daraus folgende Deformation des Radlaufflächenprofils stellt neben einer akustischen Störquelle für die Fahrgäste und Umgebung auch eine Gefahr des Materialversagens für den Radsatz und die umliegenden Bauteile, wie beispielswiese Radlager und Fahrwerk dar. Dieses Problem soll durch das sogenannte Reprofilieren des Radlaufflächenprofils weitgehend vermieden werden.

Bei der Gestaltung des Profils der Radlaufflächen wird eine sichere, fahrkomfortable und verschleißarme Führung angestrebt. Deshalb werden Konturen realisiert, die den natürlichen Verschleiß zwischen Rad und Schiene berücksichtigen. Im Idealfall sollen sich die Konturen während des Betriebes der Schienenfahrzeuge nicht oder nur geringfügig verändern.

Der entstehende Verschleiß durch den Werkstoffabtrag an Rad und Schiene ist primär von der Reibleistung in der Kontaktzone und von der Werkstoffpaarung abhängig. Grundsätzlich wird dabei zwischen einem Laufflächen- und Spurkranzverschleiß unterschieden. Durch Zusammenlegung dieser beiden Verschleißprofile ergibt sich ein mögliches Verschleißprofil, welches zu reprofilieren ist.

Eine derartige Reprofilierung kann mit₂ Radsatzbearbeitungsmaschinen durchgeführt werden, die in verschiedenartigen Varianten bekannt sind, zum Beispiel als Unterflur- oder Überflur-Ausführung sowie in Flachbett- und Portalbauweise. Mit den Radsatzbearbeitungsmaschinen werden die Radlaufflächen unter Anwendung von spanabhebenden Verfahren, vorzugsweise mittels Drehen bearbeitet, so dass diese Maschinen auch als Radsatzdrehmaschinen bezeichnet werden.

Ausgehend von der Erkenntnis, dass durch Einbringen von Druckeigenspannungen in die Oberflächen rotationssymmetrischer Körper das Verschleißverhalten verbessert werden kann, wurde bereits vorgeschlagen, ausgewählte Abschnitte von Radsätzen unmittelbar nach der Radherstellung im Neuzustand oder später nach einer erfolgreichen Reprofilierung einer zusätzlichen Festwalzbearbeitung zu unterziehen. Somit kann eine Erhöhung der weiteren Lebensdauer der Radlaufflächen durch das Festwalzen erreicht werden.

Das Festwalzen der Oberfläche ist ein mechanisches minimalinvasives Umformen der Bauteilrandschicht. Dabei werden geeignete Walzkörper unter Anpressdruck definiert über die Oberfläche des fertigen Bauteils geführt. Der direkte Bauteil-Kontaktbereich wird plastisch und der angrenzende Kontaktbereich wird elastisch verformt. In Abhängigkeit der jeweils konkreten Kontaktverhältnisse wird lediglich die Oberfläche geglättet, wobei kleine Kerben eingeebnet werden oder der Werkstoff im plastisch verformten Volumen verfestigt wird.

Bei Anwendung des Festwalzens für Radsätze wird somit durch die Kaltverfestigung der Radlaufflächen eine Glättung beziehungsweise Reduzierung der Oberflächenrauheit, eine Aufhärtung der Randschicht und eine Einbringung von Druckeigenspannungen in die Randzone erreicht. Durch die Umformung können in der Werkstückrandschicht vorhandene schädliche Eigenspannungen aus der spanenden Vorbearbeitung abgebaut werden. Im Zusammenwirken von elastischen und plastischen Verformungen wird ein festigkeitsmäßig vorteilhafter Eigenspannungszustand neu aufgeprägt. In der äußeren Randschicht sind nach dem Festwalzen Druckeigenspannungen vorhanden, die eine Verminderung des Verschleißes der Radlaufflächen beziehungsweise eine Steigerung der Laufleistung der Schienenfahrzeugräder bewirken. Dadurch werden sowohl das Auftreten eventueller Risse als auch deren Fortschreiten erheblich eingeschränkt. Diese ausschließlich mechanische Oberflächenbehandlung durch Festwalzen ist ein sehr effektives, umweltfreundliches und ressourcenschonendes Verfahren.

In DE 808 197 wird eine Rolle zum Festwalzen von Achsschenkeln an Eisenbahnradsätzen beschrieben. Die Arbeitsfläche dieser Festwalzrolle besteht aus einem zylinderförmigen Grundkörper. Beim Festwalzen verläuft die Achse der Festwalzrolle schräg zur Achse des Achsschenkels und erzeugt auf der zu bearbeitenden Oberfläche einen lang gestreckten tropfenförmigen Abdruck. Demzufolge werden im Bereich des Abdrucks durch das Festwalzen Eigenspannungen in die Oberfläche der Achsschenkel eingebracht, wodurch das Auftreten neuer Risse vermieden oder bereits vorhandene Risse zum Stillstand gebracht werden sollen. Im Ergebnis wird durch das Festwalzen eine Erhöhung der Lebensdauer eines Radsatzes erreicht. Die Anlagekraft der Festwalzrolle wird durch Vorspannmittel erzeugt.

Ein weiterer Lösungsansatz zum Festwalzen zylindrischer Wellen ist aus DE 843 822 bekannt. Diese Vorrichtung weist eine oder mehrere Festwalzrollen auf. Dabei ist jede Festwalzrolle in einem schwenkbaren Träger gelagert, dessen Schwenkachse senkrecht zur Zustellbewegung der Festwalzrolle und annähernd senkrecht zur Radsatzwelle verläuft. Auch hier wird die Anlagekraft der Walzen durch entsprechende Vorspannmittel, Federn und dgl. bewirkt.

Mit der Vorrichtung zum Festwalzen von Verschleißflächen am Profil vorgedrehter Radsätze gemäß DE 1 278 274 können unterschiedliche Relativpositionen zwischen der Festwalzrolle, deren Vorschubrichtung und der Radsatzdrehachse eingestellt werden. Für das Gleitwalzen wird hier extra eine Zusatzvorrichtung mit hydraulischer Vorspannung einer Gegenlagerwalze beschrieben.

Die WO2016/041540 offenbart die Merkmale des Oberbegriffs des Anspruchs 1.

Die Vorteile des Festwalzens insbesondere im Anschluss an eine Reprofilierung durch die spanabhebende Bearbeitung, insbesondere Drehen, sind bekannt und umfassend beschrieben.

Es hat sich gezeigt, dass das Festwalzen nicht zwingend eine einheitliche Randschicht erzeugt, sodass entweder eine reprofilierte Geometrie mit der die Fläche unterschiedlich verteilten Festigkeitseigenschaften entsteht oder durch das Festwalzen die reprofilierte Geometrie geringfügig verändert wird.

So werden nach dem Stand der Technik nach den vorbekannten Verfahren mit den vorgeschlagenen Vorrichtungen gute Ergebnisse in der Walzverfestigung erzielt, jedoch nicht die beschriebenen Unzulänglichkeiten berücksichtigt und ausgeräumt.

Ausgehend vom vorbeschriebenen Stand der Technik liegt der vorliegenden Erfindung die Aufgabe zu Grunde, die Vorrichtung zur Bearbeitung von Radlaufflächen von Schienenfahrzeugen dahingehend zu optimieren, dass auch nach dem Festwalzen eine verbesserte Oberflächenhomogenität bei optimiertem Profil erzielt werden kann.

Vorrichtungsseitig ist eine erfindungsgemäße Maschine mit den Merkmalen gemäß Anspruch 1 ausgebildet. Weitere Vorteile und Merkmale sind in den Unteransprüchen gekennzeichnet.

Erfindungsgemäß ist vorgesehen, dass beispielsweise nach einer Reprofilierung in üblicher Weise eine Walzbearbeitung durchgeführt wird. Dabei wird die Walzbearbeitung unter einer definierten und steuerbaren Kraft durchgeführt, so dass das Endergebnis deutlich verbessert ist.

Dieses Vorgehen hat zum Einen den Vorteil, dass im Endstadium eine weitgehend homogenisierte Oberflächenbeschaffenheit bei optimierter geometrischer Ausbildung des Rades erreicht ist. Sowohl in Abhängigkeit von dem jeweiligen Walzort und der Lage der jeweiligen Festwalzrolle, ggf. auch ihrer Geometrie lässt sich nunmehr an jeder zu bearbeitenden Stelle eine definierte Walzkraft anwenden und somit ein optimales Endergebnis erzielt werden.

So kann eine Reprofilierung durch mehrfach aufeinander folgende Schritte des Vermessens und des spanabhebenden Bearbeitens durchgeführt werden. Die spanabhebende Bearbeitung ist vorzugsweise Drehen. Aber selbstverständlich sind auch andere Verfahren einsetzbar, die möglicherweise zeitoptimiert verwendet werden können. Darunter zählen Schleifen, Fräsen und dergleichen. Durch die erfindungsgemäße Ausgestaltung des Verfahrens und die auf das Walzen nachfolgende Nachbearbeitung ergibt sich hier eine größere Flexibilität. Dies führt zu besseren Arbeitsergebnissen in kürzeren Bearbeitungszeiten.

In erfindungsgemäßer Weise wird eine Einspannstelle verwendet, um zum Einen das Werkzeug für die spanabhebende Bearbeitung, zum Anderen für das Walzen einsetzen zu können. Diese Einspannposition kann eine definierte Position relativ zum ausgerichteten und zu bearbeitenden Rad haben und somit kann eine optimierte Steuerung eingesetzt werden, die das Rad in kürzester Zeit auf eine optimale Geometrie bringt. Je nach Vorrichtung können eine Vielzahl von Einspannstellen verwendet werden, die flexibel bestückbar sind. Je nach Bearbeitungsvorgang kann dann eine entsprechende Steuerung zum Einsatz kommen.

Mit der Erfindung wird eine neuartige Vorrichtung zur Bearbeitung der Radlaufflächen von Radsätzen für Schienenfahrzeuge bereitgestellt, welche als beliebige Maschine, Unterflur, Überflur, mobil und dergleichen einsetzbar ist. Sie optimiert zum Einen die Bearbeitungszeit, zum Anderen die endgültige Radgeometrie. Darüber hinaus wird die Oberflächenqualität des gewalzten Rades deutlich verbessert, woraus eine verlängerte Standzeit resultieren kann.

Vorrichtungsseitig wird eine Vorrichtung zur Durchführung dieses Verfahrens dadurch gekennzeichnet, dass wenigstens eine Einspanneinheit für ein Werkzeug vorhanden ist, welches eine definierte Position relativ zu einem durch Grundeinstellung positionierten Rad inne hat. Diese Einspanneinheit dient abwechselnd der Aufnahme eines Drehwerkzeuges bzw. eines Walzwerkzeuges.

Durch die Erfindung ist es möglich, aufeinanderfolgende spanabhebende Bearbeitungen einerseits und festwalzende Bearbeitungen andererseits in beliebiger Reihenfolge durchzuführen und diese durch entsprechende Vermessungen zu ergänzen. Auf diese Weise kann in zeit- und geometrieoptimierter Weise eine sehr präzise Bearbeitung und Steuerung erfolgen. Darüber hinaus können sehr flexibel Werkzeuge für die Spanbearbeitung einerseits und unterschiedliche Walzeinheiten eingesetzt werden, je nachdem, ob Teilprofile oder Gesamtprofile bearbeitet werden.

Gemäß der Erfindung wird eine mit geringem wirtschaftlichem Aufwand umsetzbare Lösung bereitgestellt, mit welcher optimierte Rädergeometrien herstellbar sind. Insbesondere kann die Erfindung auch erhebliche Zeiteinsparungen mit sich bringen.

Weitere Vorteile und Merkmale ergeben sich aus der Beschreibung anhand der Figuren. Dabei zeigen:
- Fig. 1: eine perspektivische Darstellung einer erfindungsgemäßen Vorrichtung zur Durchführung des erfindungsgemäßen Verfahrens in einer Reprofilierungskonstellation;
- Fig. 2: eine Darstellung gemäß Fig. 1 in einer Walzkonstellation und

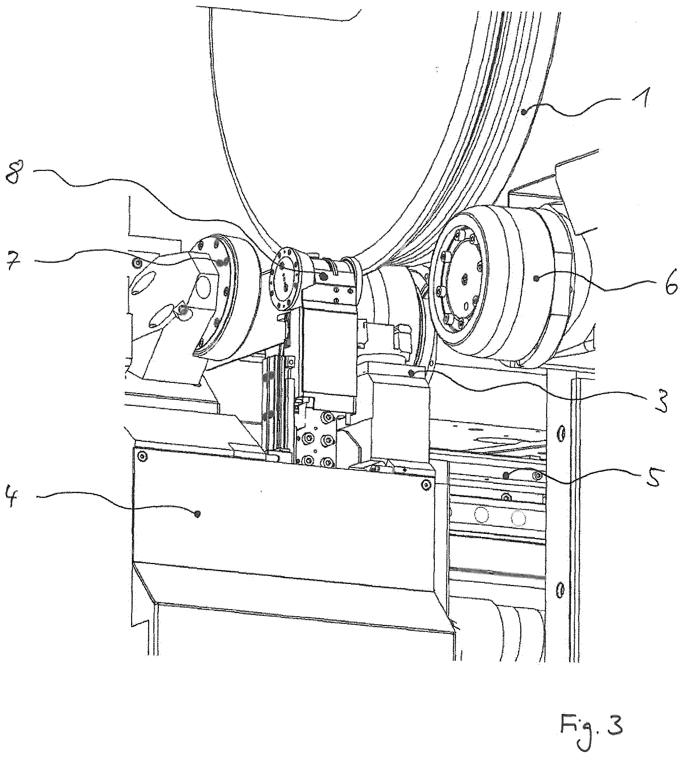

- Fig. 3: eine Darstellung gemäß Fig. 1 in einer Messkonstellation.

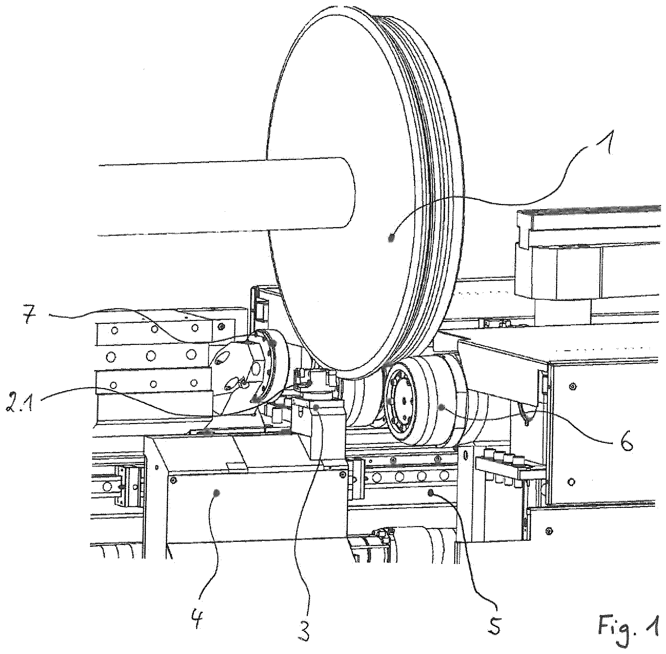

In den Figuren sind gleiche Elemente mit gleichen Bezugszeichen versehen. Die Figuren zeigen beispielhaft eine Radbearbeitungsmaschine 5. Eine Radbearbeitungsmaschine bedeutet, dass ein Radsatz 1 über entsprechende Transportwege an eine bestimmte Position gebracht wird, wie sie in den Figuren gezeigt ist. Der Radsatz 1 wird durch Antriebsrollen 6 in Drehung versetzt. Ein Werkzeughalter/Einspanneinheit 3 ist im Beispiel der Figur 1 mit einem Drehwerkzeug 2.1 bestückt und ist definiert positionierbar auf dem Support 4 montiert. Der in Drehung versetzte Radsatz kann nunmehr mittels Drehwerkzeug 2.1 bearbeitet werden. Bezugsziffer 6 bezeichnet die axiale Führungsrolle, welche axial auftretende Kräfte aufnehmen und den Radsatz 1 axial fixieren.

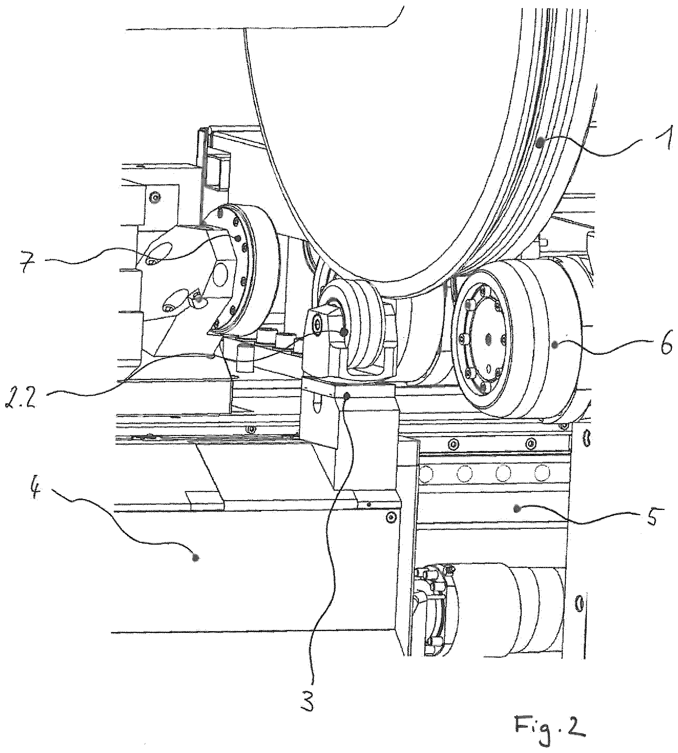

In den Werkzeughalter 3 ist gemäß Fig. 2 ein Walzwerkzeug 2.2 eingesetzt, so dass beispielsweise im Anschluss an eine Reprofilierung durch Drehen nunmehr ein Festwalzen erfolgen kann.

In der besonderen Ausführungsform kann die Maschine 1 auch mit einem Vermessungswerkzeug 8 mit Messtastern versehen werden. Auf diese Weise kann direkt eine anschließende Vermessung beispielsweise nach der Reprofilierung und/oder auch nach dem Festwalzen durchgeführt werden. Das Vermessungswerkzeug 8 ist im Support integriert und kann neben dem Halter 3 herausgefahren werden.

Das beschriebene Ausführungsbeispiel dient nur der Erläuterung und ist nicht beschränkend.

### Bezugszeichenliste

- 1.: Radsatz
- 2.1: Drehwerkzeug
- 2.2: Walzwerkzeug
- 3.: Einspanneinheit
- 4.: Werkzeugsupport
- 5.: Radbearbeitungsmaschine
- 6.: Antriebsrolle
- 7.: Axiale Führungsrolle
- 8.: Messeinrichtung

## Patentansprüche

1. Vorrichtung zur Bearbeitung der Radlaufflächen von Radsätzen (1) für Schienenfahrzeuge mittels einer Radbearbeitungsmaschine, wobei in einem Verfahrensschritt eine Walzbearbeitung der Räder mit einer Festwalzrolle durchgeführt wird, **dadurch gekennzeichnet, dass** die Vorrichtung wenigstens eine Einspanneinheit (3) für ein Werkzeug (2.2, 2.2) aufweist, die in einer definierten Position relativ zu einem durch Grundeinstellung positionierten Rad angeordnet ist, um abwechselnd als Aufnahme für ein Werkzeug (2.1) für eine spanabhebende Bearbeitung oder ein Walzwerkzeug (2.2) zu dienen, wobei die Walzkraft durch die Steuerung der Drehmomente von Antriebsmotoren der Vorschubachsen des Walzwerkzeugs (2.2) einstellbar ist.

2. Vorrichtung nach Anspruch 1, **dadurch gekennzeichnet, dass** sie eine Unterflurmaschine umfasst.

3. Vorrichtung nach einem der vorhergehenden Ansprüche , **dadurch gekennzeichnet, dass** diese eine NC gesteuerte Bearbeitungseinheit umfasst.

4. Vorrichtung nach einem der vorhergehenden Ansprüche, **dadurch gekennzeichnet, dass** diese eine Steuerung zur Teilprofilbearbeitung umfasst.

## Claims

1. Device for machining the wheel running surfaces of wheelsets (1) for rail vehicles by means of a wheel machining machine, wherein in one process step, rolling machining of the wheels is carried out with a work roller, **characterised in that** the device comprises at least one clamping unit (3) for a tool (2.2, 2.2) which is arranged in a defined position relative to a wheel positioned by means of a basic adjustment in order to alternately serve as a receptacle for a tool (2.1) for chip-removing machining or a rolling tool (2.2), whereby the rolling force is adjustable by controlling the torques of drive motors of the feed axes of the rolling tool (2.2).

2. Device in accordance with Claim 1, **characterised in that** it comprises an underfloor machine.

3. Device in accordance with one of the preceding claims, **characterised in that** this comprises an NC-controlled machining unit.

4. Device in accordance with one of the preceding claims, **characterised in that** this comprises a control system for partial profile machining.

## Revendications

1. Dispositif destiné à l'usinage des surfaces de roulement des roues d'essieux montés (1) pour véhicules sur rail au moyen d'une machine d'usinage de roue, un usinage des roues par laminage étant réalisé à l'aide d'un galet lors d'une étape du procédé, **caractérisé en ce que** le dispositif comporte au moins une unité de serrage (3) pour un outil (2.2, 2.2), unité placée dans une position définie par rapport à une roue positionnée via le réglage de base afin de servir tour à tour de réception pour un outil (2.1) pour un usinage par enlèvement de copeaux ou pour un outil de laminage (2.2), la force de laminage pouvant être réglée via la commande des couples de serrage de moteurs d'entraînement des axes d'avance de l'outil de laminage (2.2).

2. Dispositif selon la revendication 1, **caractérisé par le fait qu'**il comprend une machine en fosse.

3. Dispositif selon l'une des revendications précédentes, **caractérisé par le fait qu'**il comprend une unité d'usinage à commande CN.

4. Dispositif selon l'une des revendications précédentes, **caractérisé par le fait qu'**il comprend une commande permettant l'usinage partiel de profil.
